Europäisches Patentamt

European Patent Office

Office européen des brevets

(19)

(11) Numéro de publication: **0 225 210**
**B1**

(12) **FASCICULE DE BREVET EUROPEEN**

(45) Date de publication du fascicule du brevet: 30.05.90

(51) Int. Cl.⁵: **G 01 J 3/02**

(21) Numéro de dépôt: **86402289.2**

(22) Date de dépôt: **14.10.86**

(54) Appareil de spectro-colorimétrie à fibres optiques.

(30) Priorité: **16.10.85 FR 8515351**

(43) Date de publication de la demande:
**10.06.87 Bulletin 87/24**

(45) Mention de la délivrance du brevet:
**30.05.90 Bulletin 90/22**

(84) Etats contractants désignés:
**AT BE CH DE ES FR GB GR IT LI LU NL SE**

(56) Documents cités:
**FR-A-2 097 106
FR-A-2 303 274
GB-A-2 155 173
NL-A-7 905 871
US-A-3 874 799**

**ANALYTICAL CHEMISTRY, vol. 52, no. 6, mai
1980, pages 916-920, American Chemical
Society, Columbus, Ohio, US; K.L. RATZLAFF:
"Spectrophotometer based on a charge-coupled
device photoarray detector"**

(73) Titulaire: **BERTIN & CIE
Zone Industrielle Les Gâtines Allée Gabriel
Voisin
F-78370 Plaisir (FR)**

(72) Inventeur: **Lequime, Michel
6 rue des Sauries
F-13510 Eguilles (FR)**
Inventeur: **Millet, Jocelyn
20 rue des Bougainvillées
F-84120 Pertuis (FR)**
Inventeur: **Debrie, Jean
La Reynarde Bâtiment B 28 Ave. du Colonel
Schuler
F-13090 Aix en Provence (FR)**

(74) Mandataire: **Ramey, Daniel
Cabinet Ores 6 Avenue de Messine
F-75008 Paris (FR)**

**EP 0 225 210 B1**

(56) Documents cités:

**PATENTS ABSTRACTS OF JAPAN, vol. 6, no. 198 (P-147)1076r, 7 octobre 1982; & JP-A-57 108 766 (SHIMAZU SEISAKUSHO K.K.) 06-07-82**

**PATENTS ABSTRACTS OF JAPAN, vol. 6, no. 225 (P-154)1103r, 10 novembre 1982; & JP-A-57 128 823 (SHIMAZU SEISAKUSHO K.K.) 10-08-1982**

**MESURES, REGULATIONS, AUTOMATISMES, vol. 49, no, 16, 3 décembre 1984, pages 75-77,79,80, Paris, FR; "Couplage fibres optiques spectrophotomètre: à quand la mesure en ligne"**

## Description

L'invention concerne un appareil de spectro-colorimétrie à fibres optiques, destiné en particulier à être utilisé dans un environnement industriel.

Les spectromètres et colorimètres classiques de bonne qualité sont souvent des appareils qui sont mal adaptés à une utilisation dans un environnement industriel.

En général, l'obtention de mesures précises nécessite leur utilisation en laboratoire, des opérations préalables d'étalonnage qui sont assez longues, le prélèvement des échantillons à contrôler, puis des mesures répétitives qui peuvent prendre également beaucoup de temps en fonction du flux énergétique reçu par le spectromètre ou le colorimètre, de sorte qu'il est par exemple assez difficile d'associer ces appareils à des lignes de fabrication en continu.

L'utilisation des guides en fibres optiques dans le domaine de la spectrométrie et de la colorimétrie et respectivement connue, par exemple, des documents GB-A-2155 173 et FR-A-2097 106.

L'invention a pour objet un appareil de spectro-colorimétrie, qui puisse fonctionner en spectromètre et en colorimètre, qui se présente sous forme d'un ensemble intégré particulièrement compact, qui permette des opérations d'étalonnage périodiques systématiques ou à la volonté de l'utilisateur et des mesures répétitives très rapides et très précises.

L'invention propose à cet effet un appareil de spectrocolométrie à fibres optiques, propre à fonctionner en spectromètre et en colorimètre, comprenant un spectromètre du type à mosaïque d'éléments détecteurs photosensibles, caractérisé en ce qu'il est essentiellement constitué par l'association d'un microprocesseur de commande et d'une carte opto-électronique à circuit imprimé qui porte les éléments suivants:

au moins deux voies de mesure à fibres optiques aboutissant à l'entrée du spectromètre et munies d'obturateurs permettant d'assurer la commutation des voies de mesure,

des moyens d'étalonnage des détecteurs en longueur d'onde, comprenant deux émetteurs de référence reliés par des voies d'étalonnage à fibres optiques à l'entrée du spectromètre.

le spectromètre,

et des circuits électroniques de lecture des détecteurs.

L'appareil selon l'invention comprend donc, intégrées, en un seul ensemble sur une même carte opto-électronique, un spectromètre, des moyens d'étalonnage du spectromètre, et des voies de mesure qu'il suffit de prolonger par des fibres optiques jusqu'aux points dont le spectre lumineux et/ou la couleur doivent être mesurés, ces points pouvant être très éloignés de l'appareil.

Selon une autre caractéristique de l'invention, les éléments détecteurs forment une barrette ayant une hauteur suffisante par rapport à la hauteur des extrémités superposées des fibres optiques dans une fente d'entrée, et qui est par exemple égale à la hauteur de ces extrémités superposées des fibres optiques, lorsque le montage optique du spectromètre a un rapport d'agrandissement de 1/1.

On peut ainsi disposer d'au moins 4 voies de mesure et d'étalonnage sans qu'il soit nécessaire de relier ces voies entre elles par des coupleurs optiques en amont de la fente d'entrée du spectromètre et d'équiper ces voies d'obturateurs dont l'emploi provoquerait des pertes photométriques.

Selon encore une autre caractéristique de l'invention, la largeur de la fente d'entrée est inférieure au diamètre de coeur des fibres optiques, ce qui améliore la résolution de l'appareil.

Selon encore une autre caractéristique de l'invention, les obturateurs des voies de mesure comprennent des moyens de recopie électrique de position, ce qui permet de valider les mesures par contrôle des positions des obturateurs.

Il est en effet important, lorsqu'on effectue des mesures avec un spectromètre ou un colorimètre comprenant plusieurs voies de mesure, de pouvoir vérifier qu'une seule voie de mesure est ouverte et que les autres sont bien fermées.

Selon encore une autre caractéristique de l'invention, les voies de mesure précitées constituent des voies indépendantes de mesure spectrométrique lorsque l'appareil fonctionne en spectromètre et constituent une voie de référence associée à une source d'éclairage et au moins une voie de mesure associée à un objet éclairé par ladite source, lorsque l'appareil fonctionne en colorimètre.

Avantageusement, cette source d'éclairage est associée par une fibre optique et un coupleur en Y d'une part à la voie de référence et d'autre part à l'objet à éclairer.

On améliore ainsi la mesure colorimétrique de l'objet éclairé.

Selon encore une autre caractéristique de l'invention, un correcteur plan focal, formé par un filtre à densité dégradée de compensation, est disposé sur la barrette de détecteurs, pour compenser la transmission spectrale défavorable dans le bleu des fibres optiques et éliminer le second ordre de diffraction du réseau.

L'utilisation de ce correcteur plan focal permet, d'une part, d'éviter l'utilisation de filtres bleus qui sont pénalisants en flux énergétique et, d'autre part, de garantir que les flux énergétiques des différentes raies du spectre visible arrivant sur les détecteurs soient du même ordre de grandeur.

Bien entendu, le type de filtre à densité dégradée de compensation qui sera utilisé sera fonction de la longueur des fibres optiques constituant les voies de mesure et du spectre de la source d'éclairage utilisée.

Selon encore une autre caractéristique de l'invention, les circuits électroniques montés sur la carte optoélectronique précitée comprennent des circuits de réglage automatique du temps d'intégration des détecteurs, par mesure du flux énergétique reçu par les détecteurs, comparaison du flux reçu au seuil de saturation des détecteurs, et détermination du temps d'intégration pour l'obtention d'un signal ayant un niveau aussi élevé que possible inférieur à ce seuil de saturation.

On améliore ainsi la précision des mesures, et le rapport signal/bruit des mesures de spectrométrie et de colorimétrie.

Les circuits de réglage automatique du temps d'intégration des détecteurs comprennent une horloge programmable commandée par le microprocesseur.

Par ailleurs, les moyens de lecture des détecteurs sont du type multiplex, la fréquence de lecture des détecteurs étant constante et indépendante du temps d'intégration.

Avantageusement, pour privilégier le rapport signal/bruit, la fréquence de lecture est réglée sur le temps d'intégration le plus faible.

Selon encore une autre caractéristique de l'invention, les circuits de traitement des signaux lus sur les détecteurs comprennent un convertisseur analogique-numérique, par exemple de numérisation sur 12 bits.

Lorsque l'horloge précitée est programmable sur 11 bits, les circuits selon l'invention permettent de régler automatiquement le temps d'intégration des détecteurs pour, l'asservissement du signal .obtenu à une valeur égale à 90% de la dynamique des détecteurs.

Par ailleurs, l'appareil selon l'invention est encore caractérisé en ce qu'il comprend des circuits de détermination du nombre de lectures des détecteurs à réaliser pour une mesure donnée, en fonction du flux énergétique reçu par les détecteurs et du temps d'intégration correspondant.

Comme ce temps d'intégration peut varier entre une milliseconde et une seconde environ en fonction du flux énergétique reçu, il est préférable, pour la rapidité des mesures, de faire un petit nombre de mesures lorsque le temps d'intégration·est important, et de faire un plus grand nombre de mesures lorsque le flux énergétique est plus élevé et que le temps d'intégration est plus court.

L'appareil permet également de faire des mesures de bruit des détecteurs, de façon périodique systématique ou à la volonté de l'utilisateur, par fermeture de toutes les voies de mesure, de conserver en mémoire ces signaux de bruit et les soustraire des mesures des signaux obtenus lorsqu'une voie de mesure est ouverte.

Cet appareil permet également un calage automatique, périodique ou à la volonté de l'utilisateur, des détecteurs sur des raies spectrales de longueurs d'ondes déterminées, grâce aux moyens d'étalonnage prévus sur la carte optoélectronique. Il arrive en effet, dans un environnement industriel, que l'appareil soit soumis à des chocs, à des vibrations ou à des contraintes thermiques se traduisant par des déplacements relatifs de la barrette de détecteurs et du spectromètre, qui sont faibles sur le plan mécanique, mais qui prennent une importance beaucoup plus grande pour les mesures de spectrométrie ou de colorimétrie.

Corollairement, il en résulte que les tolérances de montage de l'appareil n'ont pas à être très élevées.

Dans la description qui suit, faite à titre d'exemple, on se réfère aux dessins annexés, dans lesquels:

la figure 1 est une vue schématique d'un appareil selon l'invention;

la figure 2 est une vue plus détaillée d'un obturateur d'une voie de mesure de cet appareil.

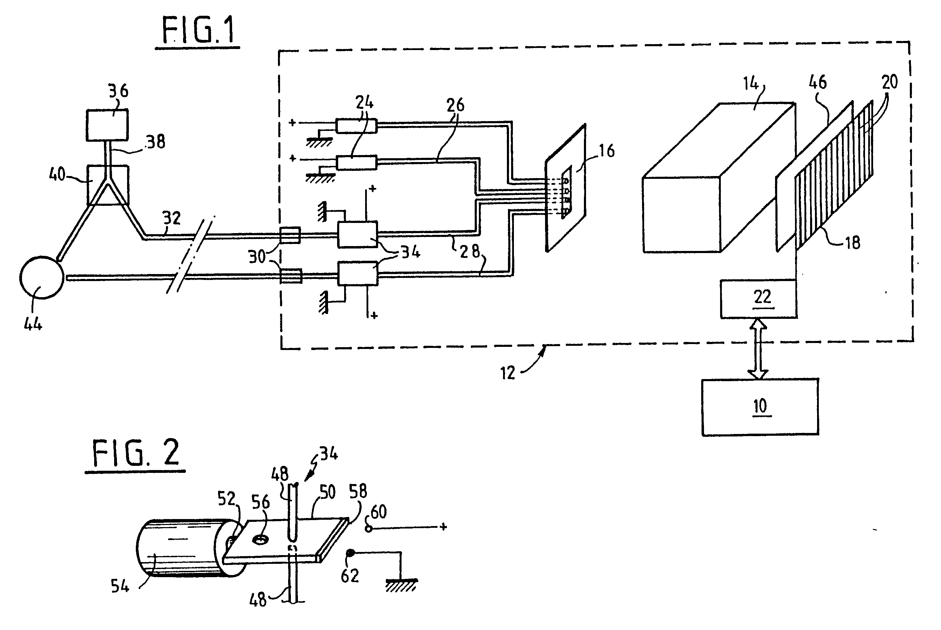

On se réfère d'abord à la figure 1 qui représente de façon schématique un appareil de spectro-colorimétrie selon l'invention.

Cet appareil est constitué essentiellement par l'association d'un microprocesseur de commande 10 et d'une carte opto-électronique 12 dont le contour a été représenté en trait pointillé et sur laquelle sont montés un spectromètre 14 du type à réseau de diffraction, par exemple à montage optique de Littrow, comprenant une fente d'entrée 16 et une barrette 18 de photodétecteurs 20 qui sont par exemple des photodiodes au silicium.

Ces photodétecteurs 20 sont associés à des circuits électroniques désignés généralement par la référence 22, qui sont montés sur la carte 12 et comprennent des circuits, par exemple du type multiplex, de lecture des charges des détecteurs, un convertisseur analogiquenumérique, par exemple de numérisation sur 12 bits, une horloge programmable, par exemple sur 11 bits, de détermination du temps d'intégration des photodétecteurs 20, des mémoires-tampons ainsi que des circuits de traitement des informations numérisées.

La carte 12 porte encore des moyens d'étalonnage en longueur d'onde des photodétecteurs 20, qui sont ici constitués par deux diodes électroluminescentes 24, alimentées ou non en courant continu sous commande du microprocesseur 10 et reliées par des fibres optiques 26 formant deux voies d'étalonnage à la fente d'entrée 16 du spectromètre. Chaque diode 24 émet, lorsqu'elle est alimentée, une radiation lumineuse de longueur d'onde déterminée, les longueurs d'ondes des radiations des deux diodes étant assez distantes l'une de l'autre dans le spectre visible.

Sur la carte 12 sont également prévues deux voies de mesure 28 à fibres optiques, dont une extrémité aboutit à la fente d'entrée 16 du spectromètre et dont l'autre extrémité peut être reliée, par l'intermédiaire d'un connecteur 30 monté sur la carte 12, à une voie de mesure 32 formée par une fibre optique pouvant avoir une très grande longueur si on le souhaite.

Chaque voie de mesure 28 montée sur la carte 12 est également équipée d'un obturateur 34, du type représenté en figure 2, qui est alimenté ou non en courant continu sous commande du microprocesseur 10 et qui permet d'ouvrir et de fermer la voie de mesure correspondante 28.

Lorsque l'appareil doit être utilisé en colorimètre, il est associé à une source d'éclairage 36, constituée par exemple par une lampe émettant un rayonnement de référence spectrale, qui est reliée par une fibre optique 38 et un coupleur 40 en Y, d'une part à l'entrée de l'une des voies de mesure 32 extérieures à la carte 12 et, d'autre part, par une fibre optique 42 à un objet 44 à éclairer, en regard duquel se trouve l'extrémité de l'autre voie de mesure 32 extérieure à la carte 12. On peut prévoir par exemple que le coupleur 40 en Y va permettre le passage vers la première voie de mesure 32 d'une faible fraction du flux énergétique qu'il reçoit en entrée, et le passage vers l'objet 44 de la fraction restante de ce flux.

La première voie de mesure 32 constitue alors une voie de référence, pour une mesure spectrométrique de la lumière reçue par l'objet 44, tandis que l'autre voie de mesure 32 constitue une voie de mesure spectrométrique de la lumière réfléchie par l'objet 44 et modifiée par la couleur de celui-ci.

De préférence, pour limiter la consommation d'énergie, et la dissipation thermique, on prévoit que l'obturateur 34 associé à la voie de référence est fermé au repos (c'est-à-dire quand il n'est pas excité), et que l'obturateur 34 de la voie de mesure est ouvert en position de repos, c'est-à-dire lorsqu'il n'est pas excité, la mesure de la lumière réfléchie 44 étant en principe beaucoup plus fréquente que la mesure de référence de la lumière émise par la lampe 36.

Lorsque l'appareil fonctionne uniquement en spectromètre, on peut utiliser uniquement la voie de mesure 32 qui n'est pas reliée au coupleur 40, ou bien, si l'on veut disposer de deux voies de mesure aboutissant à des points différents, par exemple sur une ligne de fabrication de produits, déconnecter la première voie de mesure 32 du coupleur 40 et disposer son extrémité à l'endroit voulu.

On peut par ailleurs augmenter le nombre de voies de mesure si nécessaire, en les équipant d'obturateurs et en les reliant deux à deux par des coupleurs en Y tels que le coupleur 40, dont la branche commune est reliée à l'entrée d'une voie de mesure 28 portée par la carte 12.

Les extrémités des fibres optiques formant les voies de mesure 28 et les voies d'étalonnage 26 sont superposées les unes aux autres dans la fente d'entrée 16 du spectromètre. Les détecteurs 20 doivent alors avoir une hauteur suffisante, correspondant à la hauteur des extrémités superposées des fibres optiques. Lorsque le spectromètre 14 est à montage optique de Littrow dont le rapport d'agrandissement est de 1/1, la hauteur des détecteurs 20 doit être au moins égale à la hauteur des extrémités superposées des quatre fibres optiques formant les voies de mesure et d'étalonnage, c'est-à-dire en fait à quatre fois le diamètre d'une fibre optique.

La largeur de la fente d'entrée 16 est de préférence inférieure au diamètre de coeur d'une fibre optique, afin d'augmenter la résolution du spectromètre. Lorsqu'une fibre optique a un diamètre de coeur d'environ 200µm., la largeur de la fente d'entrée 16 est par exemple de 50µm. On peut bien entendu utiliser une fente de largeur supérieure, lorsqu'il faut disposer d'un flux énergétique plus important pour les mesures.

Comme on le voit en figure 1, un filtre 46 à densité dégradée de compensation, appelé correcteur plan focal, est placé sur les photodétecteurs 20, de façon à ce que ces derniers reçoivent des flux énergétiques du même ordre de grandeur et, de préférence, sensiblement égaux.

On sait en effet que les fibres optiques ont une transmission spectrale défavorable dans le bleu, de telle sorte que les flux énergétiques des composantes spectrales entrant dans le spectromètre sont beaucoup plus faibles dans le bleu que dans le rouge, cette atténuation étant d'autant plus importante que la longueur des fibres optiques formant les voies de mesure est plus grande. Le correcteur plan focal 20 permet de rétablir une densité sensiblement régulière de flux énergétique sur les photodétecteurs 20. Par ailleurs, son utilisation est préférable à celle d'un ensemble de filtres bleus, qui ne laissent passer qu'une fraction du flux énergétique incident.

On se réfère maintenant à la figure 2, qui représente schématiquement un obturateur 34 monté sur une voie de mesure 28 de la carte 12 de l'appareil de la figure 1.

Cette voie de mesure 28 comprend deux fibres optiques 48 alignées, dont les extrémités en regard sont séparées par un intervalle très faible dans lequel se déplace, perpendiculairement aux fibres optiques 48, une petite plaque 50 reliée au noyau mobile 52 d'un petit électroaimant 54 alimenté en courant continu sous commande du microprocesseur 10. La plaque 50 comprend un trou 56 qui, selon que l'électro-aimant 54 est excité ou non, est amené entre les extrémités des fibres optiques 48 ou écarté de ces extrémités.

Dans l'exemple représenté, lorsque l'électro-aimant 54 n'est pas excité, le trou 56 n'est pas en regard des extrémités des fibres 48, et la voie de mesure ou de référence formée par ces fibres est fermée. Lorsque l'électro-aimant 54 est excité, le trou 56 se trouve entre les extrémités des fibres 48 et la voie de mesure ou de référence est ouverte.

A son extrémité opposée à l'électro-aimant 54, la plaque 50 porte une bande électroconductrice 58 propre à coopérer avec deux contacts fixes 60 et 62 dont l'un est relié à une ligne d'alimentation en courant et dont l'autre est reliée à la masse, de telle sorte que la bande conductrice 58 et les contacts fixes 60 et 62 forment un interrupteur. Lorsque l'électro-aimant 54 est excité, cet interrupteur est fermé, et le passage du courant électrique dans le circuit correspondant permet de vérifier que la plaque 50 a été déplacée correctement et que la voie de mesure ou de référence formée par les fibres 48 est ouverte. Inversement, lorsque l'électro-aimant 54 n'est pas excité, l'interrupteur est ouvert, ce qui permet également de vérifier que la voie de mesure ou de référence correspondante est fermée.

Pour fixer les idées, on précisera, à titre d'exem-

ple, que la plaque 50 peut avoir une longueur de quelques millimètres, une largeur de 1 à 2 mm, une épaisseur très faible inférieure à 0, 1 mm, et est déplacée en translation par l'électro-aimant 54 sur une course d'environ 1 mm. Le trou 56 peut avoir un diamètre de l'ordre de 500µm environ lorsque les fibres 48 ont un diamètre de coeur de 200µm.

L'appareil qui vient d'être décrit fonctionne de la façon suivante:

Les opérations d'étalonnage ou de calibrage des photodétecteurs 20 peuvent être réalisées automatiquement de façon périodique, sous commande du microprocesseur 10, ou à volonté de l'utilisateur. Pour cela, les obturateurs 34 des voies de mesure 28 sont fermés, et des mesures sont réalisées par allumage d'une diode 24, l'autre étant éteinte, puis par allumage de l'autre diode 24, la première étant éteinte. Ces mesures sont répétées systématiquement, à des intervalles de temps prédéterminés plus ou moins longs, les résultats des premières mesures étant conservés en mémoire et comparés aux résultats des mesures réalisées ensuite, pour vérifier leur concordance et pour recalibrer automatiquement la barrette de photodétecteurs 20, si nécessaire, à la suite d'un décalage accidentel résultant par exemple d'un choc mécanique ou thermique ou de vibrations.

Pour effectuer une mesure spectrométrique, les deux diodes 24 sont maintenues éteintes, et une voie de mesure 28 est ouverte, l'autre ou les autres voies de mesure 28 étant fermées. Le flux énergétique reçu par les photodétecteurs 20 est mesuré et comparé à leur seuil de saturation, pour déterminer le temps d'intégration par les photodétecteurs du signal reçu, et obtenir un signal aussi important que possible, mais inférieur au seuil de saturation. Le temps d'intégration varie en général entre une milliseconde et une seconde environ, et est déterminé par une horloge programmable sur 11 bits, permettant d'asservir automatiquement le temps d'intégration à la valeur du flux énergétique reçu, pour l'obtention d'un signal représentant 90% de la dynamique des photodétecteurs. Lorsque ces détecteurs sont des photodiodes au silicium, ils ont une bande spectrale d'analyse allant de 350 à 1100 nm avec une dynamique pouvant atteindre 5000 (rapport du seuil de saturation au seuil de bruit).

L'association de tels détecteurs avec une horloge programmable confère au dispositif une dynamique de $10^6$ en flux énergétique incident.

Les signaux des détecteurs 20, c'est-à-dire en fait leurs charges, sont lus par des circuits de lecture du type multiplex, ayant une fréquence de lecture constante égale à la fréquence maximale de lecture des détecteurs de la barrette, c'est-à-dire celle qui correspond à la valeur minimale du temps d'intégration. La lecture des photodétecteurs se traduit par la remise à zéro de l'intégration pour la mesure suivante.

Les signaux lus sur les détecteurs sont numérisés par un convertisseur analogique-numérique, par exemple du type à numérisation sur 12 bits.

On cherche en général à multiplier le nombre de mesures, ce qui permet, statistiquement, d'améliorer le rapport signal/bruit d'un facteur racine carrée de n, n étant le nombre de mesures. Ce nombre n est déterminé en fonction du temps d'intégration de chaque mesure, de façon à ce que la durée totale de ces mesures reste faible, par exemple inférieure à une seconde.

Le bruit des photodétecteurs est mesuré par fermeture de toutes les voies de mesure. Le bruit mesuré est automatiquement soustrait du signal de mesure obtenu par ouverture d'une voie de mesure ou de référence.

Lorsque le flux énergétique reçu par les photodétecteurs est faible, et que le temps d'intégration est donc important, on peut se contenter de faire une seule mesure, puis de lisser le signal obtenu par des transformations mathématiques du type transformée de Fourier. Il existe actuellement des logiciels rapides qui, associés à un microprocesseur adéquat, permettent de faire un lissage de courbe par transformée de Fourier en moins d'une seconde. Il est donc dans ces conditions plus rapide, lorsque le temps d'intégration est important, de se contenter d'une mesure et de lisser la courbe obtenue par une transformée de Fourier, que de faire une série de mesures qui peut prendre cinq à dix fois plus de temps.

Lorsque l'appareil fonctionne en colorimètre, la voie de référence associée à la lampe 36 est ouverte pour une mesure spectrométrique du rayonnement émis par cette lampe, tandis que la voie de mesure associée à l'objet 44 est fermée, puis la voie de référence est fermée tandis que la voie de mesure associée à l'objet 44 est ouverte, pour une mesure spectrométrique de la lumière réfléchie par cet objet, le rapport des deux mesures permettant de déterminer la couleur de l'objet.

Un appareil de spectro-colorimétrie selon l'invention présente par exemple les caractéristiques suivantes:

bande spectrale analysable = 350-1100 nm
résolvance de l'appareil = 5 nm
étalonnage automatique en longueur d'onde
compensation automatique des déréglages mécaniques
grande dynamique du flux énergétique analysable ($10^6$)
réglage automatique du temps d'intégration des détecteurs et asservissement à 90% de la dynamique des détecteurs
utilisation d'une carte opto-électronique de largeur standard 100 mm, portant le spectromètre logé dans un boîtier parallélépipédique ayant des dimensions de l'ordre de 95 mm × 35 mm × 40 mm, et les sousensembles intégrés de mesure, d'étalonnage et de traitement.

**Revendications**

1. Appareil de spectro-colorimétrie à fibres optiques, propre à fonctionner en spectromètre et en colorimètre, comprenant un spectromètre (14) du type à mosaïque d'éléments détecteurs photosensibles, caractérisé en ce qu'il est essentiellement constitué par l'association d'un microprocesseur de commande (10) et d'une carte opto-électronique (12) à circuit imprimé qui porte les éléments suivants:

au moins deux voies de mesure (28) à fibres optiques aboutissant à l'entrée (16) du spectromètre et munies d'obturateurs (34) permettant d'assurer la commutation des voies de mesure,

des moyens d'étalonnage des détecteurs (20) en longueur d'onde, comprenant deux émetteurs de référence (24) reliés par des voies d'étalonnage (26) à fibres optiques à l'entrée (16) du spectromètre,

le spectromètre (14),

et des circuits électroniques (22) de lecture des détecteurs (20).

2. Appareil selon la revendication 1, caractérisé en ce que les détecteurs (20) forment une barrette (18) ayant une hauteur suffisante, en rapport avec la hauteur des extrémités des fibres optiques superposées dans une fente d'entrée (16), et qui est par exemple égale à la hauteur des extrémités superposées des fibres optiques.

3. Appareil selon la revendication 2, caractérisé en ce que la largeur de la fente d'entrée (16) est inférieure au diamètre de coeur des fibres optiques.

4. Appareil selon l'une des revendications 1 à 3, caractérisé en ce que les obturateurs (34) des voies de mesure comprennent des moyens (58, 60, 62) de recopie électrique de position, permettant de valider les mesures par contrôle des positions des obturateurs.

5. Appareil selon l'une des revendications précédentes, caractérisé en ce que les voies de mesure (28, 32) constituent des voies indépendantes de mesure spectrométrique lorsque l'appareil fonctionne en spectromètre, et constituent une voie de référence associée à une source d'éclairage (36) et au moins une voie de mesure associée à un objet (44) éclairé par ladite source, lorsque l'appareil fonctionne en colorimètre.

6. Appareil selon la revendication 5, caractérisé en ce que la source d'éclairage (36) est associée, par des moyens (38) à fibres optiques et un coupleur en Y (40), d'une part à la voie de référence (32) et, d'autre part, à l'objet (44) à éclairer.

7. Appareil selon la revendication 5, caractérisé en ce que l'obturateur (34) associé à la voie de référence est fermé au repos tandis que l'obturateur (34) associé à une voie de mesure est ouvert au repos.

8. Appareil selon l'une des revendications précédentes, caractérisé en ce qu'un correcteur plan focal (46), formé par un filtre à densité dégradée de compensation, est disposé sur la barrette (18) de détecteurs (20) pour compenser la transmission spectrale défavorable dans le bleu des fibres optiques.

9. Appareil selon l'une des revendications précédentes, caractérisé en ce que les émetteurs de référence associés aux voies d'étalonnage (26) sont des diodes électroluminescentes (24) émettant des bandes spectrales déterminées différentes dans le spectre visible.

10. Appareil selon l'une des revendications précédentes, caractérisé en ce que les circuits électroniques (22) montés sur la carte opto-électronique (12) comprennent des circuits de réglage automatique du temps d'intégration des détecteurs, par mesure du flux énergétique reçu par les détecteurs, comparaison du flux reçu au seuil de saturation des détecteurs et détermination du temps d'intégration pour l'obtention d'un signal ayant un niveau aussi élevé que possible inférieur à ce seuil de saturation.

11. Appareil selon la revendication 10, caractérisé en ce que les circuits de réglage automatique du temps d'intégration des détecteurs comprennent une horloge programmable commandée par le microprocesseur (10).

12. Appareil selon l'une des revendications précédentes, caractérisé en ce que la partie des circuits de réglage servant à mesurer le flux reçu par les détecteurs est propre à mesurer également les signaux de bruit de détecteurs (20), lorsque les obturateurs (34) des voies de mesure sont fermés, ladite partie de mesure étant prévue pour soustraire les signaux de bruit des signaux de mesure obtenus lorsqu'un obturateur (34) d'une voie de mesure est ouvert.

13. Appareil selon l'une des revendications précédentes, caractérisé en ce que les moyens de lecture des détecteurs (20) sont du type multiplex, la fréquence de lecture des détecteurs étant constante et indépendante du temps d'intégration, et par exemple égale à la fréquence maximale de lecture des détecteurs (20) correspondant au temps d'intégration le plus court.

14. Appareil selon l'une des revendications précédentes, caractérisé en ce que les circuits électroniques comprennent un convertisseur analogique numérique de numérisation des informations sur 12 bits par exemple.

15. Appareil selon l'une des revendications précédentes, caractérisé en ce que le microprocesseur (10) comprend des moyens de détermination du nombre de lectures des détecteurs à réaliser pour une mesure donnée, en fonction de la valeur du flux énergétique reçu par les détecteurs (20).

16. Appareil selon la revendication 15, caractérisé en ce que le microprocesseur (10) effectue un lissage par transformée de Fourier lorsque le nombre de lectures est faible.

**Patentansprüche**

1. Spektrokolorimetrische Vorrichtung mit optischen Fasern, die zum Arbeiten in einem Spektrometer oder in einem Kolorimeter geeignet ist, die ein Spektrometer (14) eines Typs mit einem photoempfindlichen Detektorelementenmosaik aufweist, dadurch gekennzeichnet, daß sie im wesentlichen aus der Kombination eines Steuermikroprozessors (10) und einer optoelektronischen Karte (12) mit einer gedruckten Schaltung gebildet wird, die folgende Elemente trägt:

zumindest zwei Meßkanäle (28) aus optischen Fasern, die zu dem Eingang (16) des Spektrometers führen und mit Verschlüssen (34) versehen sind, welche die Umschaltung der Meßkanäle ermöglichen,

Eichmittel mit Detektoren (20) für die Wellenlänge, die aus zwei Referenzsendern (24) bestehen, die mit dem Eingang (16) des Spektrometers über Eichkanäle (26) aus optischen Fasern verbunden sind,

das Spektrometer (14),

und elektronische Leseschaltungen (22) für die Detektoren (20).

2. Vorrichtung nach Anspruch 1, dadurch gekennzeichnet, daß die Detektoren (20) einen Satz (18) mit einer hinreichenden Höhe aufweist, welche in einem Verhältnis zur Höhe der Enden der in einem Eingangsspalt (16) übereinandergelegten optischen Fasern steht und welche beispielsweise gleich der Höhe der übereinandergelegten optischen Fasern ist.

3. Vorrichtung nach Anspruch 2, dadurch gekennzeichnet, daß die Breite des Eingangsspaltes (16) kleiner ist als der Durchmesser des Kernes der optischen Fasern.

4. Vorrichtung nach einem der Ansprüche 1 bis 3, dadurch gekennzeichnet, daß die Verschlüsse (34) der Meßkanäle Mittel (58, 60, 62) zum elektrischen Erfassen der Stellung aufweisen, sodaß es möglich ist, durch Überprüfen der Stellungen der Verschlüsse die Messungen gültig zu machen.

5. Vorrichtung nach einem der vorgehenden Ansprüche, dadurch gekennzeichnet, daß die Meßkanäle (28, 32) unabhängige spektrometrische Meßkanäle bilden, wenn die Vorrichtung in einem Spektrometer arbeitet und einen mit einer Lichtquelle (36) verbundenen Referenzkanal und zumindest einen, mit einem durch die Quelle beleuchteten Gegenstand (44) verbundenen Meßkanal bildet, wenn die Vorrichtung in einem Kolorimeter arbeitet.

6. Vorrichtung nach Anspruch 5, dadurch gekennzeichnet, daß die Lichtquelle (36) durch optische Fasermittel (38) und einen Y-Koppler (40) einerseits mit dem Referenzkanal (32) und andererseits mit dem zu beleuchtenden Gegenstand (44) verbunden ist.

7. Vorrichtung nach Anspruch 5, dadurch gekennzeichnet, daß der mit dem Referenzkanal verbundene Verschluß (34) in der Ruhestellung geschlossen ist, wogegen der mit einem Meßkanal verbundene Verschluß (34) in der Ruhestellung offen ist.

8. Vorrichtung nach einem der vorgehenden Ansprüche, dadurch gekennzeichnet, daß ein Brennebenenausgleicher (46), der von einem Filter mit abgetönter Kompensationsdichte gebildet ist, auf dem Satz (18) von Detektoren (20) angeordnet ist, um die ungünstige spektrale Übertragung der optischen Fasern im Blaubereich zu kompensieren.

9. Vorrichtung nach einem der vorgehenden Ansprüche, dadurch gekennzeichnet, daß die mit den Eichkanälen (26) verbundenen Referenzsender Elektrolumineszenzdioden (24) sind, die unterschiedliche, bestimmte Spektralbänder in dem sichtbaren Spektrum emittieren.

10. Vorrichtung nach einem der vorgehenden Ansprüche, dadurch gekennzeichnet, daß die auf der optoelektronischen Karte (12) angebrachten elektronischen Schaltungen (22) durch Messen des mittels der Detektronen erhaltenen Strahlungsflusses, Vergleichen des erhaltenen Flusses an der Sättigungsschwelle der Detektoren und Bestimmen der Integrationszeit zum Erhalten eines Signales mit einem so hohen Pegel wie unterhalb dieser Sättigungsschwelle möglich ist, automatische Regelungsschaltungen für die Integrationszeit der Detektoren enthalten.

11. Vorrichtung nach Anspruch 10, dadurch gekennzeichnet, daß die automatischen Regelungsschaltungen für die Integrationszeit der Detektoren einen programmierbaren, von dem Mikroprozessor (10) gesteuerten Taktgeber enthalten.

12. Vorrichtung nach einem der vorgehenden Ansprüche, dadurch gekennzeichnet, daß der Teil der Regelungsschaltungen, die zum Messen des mittels der Detektoren erhaltenen Flusses dienen, gleichermaßen zum Messen der Rauschsignale von Detektoren (20) geeignet ist, wenn die Verschlüsse (34) der Meßkanäle geschlossen sind, und der Meßteil zum Subtrahieren der Rauschsignale von den erhaltenen Meßsignalen vorgesehen ist, wenn ein Verschluß (34) eines Meßkanals offen ist.

13. Vorrichtung nach einem der vorgehenden Ansprüche, dadurch gekennzeichnet, daß die Lesemittel für die Detektoren (20) vom Multiplextyp sind, die Lesefrequenz der Detektoren konstant und unabhängig von der Integrationszeit ist und beispielsweise gleich der maximalen Lesefrequenz der Detektoren (20) ist, welche der kürzesten Integrationszeit entspricht.

14. Vorrichtung nach einem der vorgehenden Ansprüche, dadurch gekennzeichnet, daß die elektronischen Schaltungen einen Analog-Digital-Wandler für die Informationen, beispielsweise mit 12 Bit, enthalten.

15. Vorrichtung nach einem der vorgehenden Ansprüche, dadurch gekennzeichnet, daß der Mikroprozessor (10) Mittel zum Bestimmen der Anzahl der bei einer bestimmten Messung durchzuführenden Ablesungen der Detektoren in Abhängigkeit von dem Wert des mittels der Detektoren (20) erhaltenen Strahlungsflusses aufweist.

16. Vorrichtung nach Anspruch 15, dadurch gekennzeichnet, daß der Mikroprozessor (10) mittels der Fourier-Transformation ein Glätten durchführt, wenn die Anzahl der Ablesungen klein ist.

## Claims

1. An optical fiber spectrometer/colorimeter apparatus suitable for operating as a spectrometer and as a colorimeter, the apparatus comprising a spectrometer (14) including a mosaic of photodetectors (20), characterized in that it is essentially constituted by the association of a controlling microprocessor (10) and an optoelectronic printed circuit card (12) bearing the following items:

at least two optical fiber measurement paths (28) ending at the inlet (16) of the spectrometer, and fitted with shutters (34) enabling the measurement paths to be switched;

wavelength calibration means for the detectors (20), comprising two reference emitters (24) connected by optical fiber calibration paths (26) to the inlet (16) of the spectrometer;

the spectrometer (14); and

electronic circuits (22) for reading the detectors (20).

2. Apparatus according to claim 1, characterized in that the detectors (20) form a strip (18) of adequate height relative to the height of the ends of the optical fibers superposed in an inlet slot (16), which height is, for example, equal to the height of the superposed optical fiber ends.

3. Apparatus according to claim 2, characterized in that the width of the inlet slot (16) is less than the core diameter of the optical fibers.

4. Apparatus according to any one of claims 1 to 3, characterized in that the shutters (34) on the measurement paths include electrical means (58, 60, 62) for reproducing their positions, thereby making it possible to validate measurements by verifying the positions of the shutters.

5. Apparatus according to any preceding claim, characterized in that the measurement paths (28, 32) constitute independent spectrometric measurement paths when the apparatus operates as a spectrometer, and constitute a reference path associated with a light source (36) and at least one measurement path associated with an object (44) illuminated by said source when the apparatus operates as a colorimeter.

6. Apparatus according to claim 5, characterized in that the light source (36) is associated firstly with a reference path (32) and secondly with an object (44) to be illuminated by optical fiber-means (38) and a Y-coupler (40).

7. Apparatus according to claim 5, characterized in that the shutter (34) associated with the reference path is closed at rest, whereas the shutter (34) associated with a measurement path is open at rest.

8. Apparatus according to any preceding claim, characterized in that a focal plane corrector (46) formed by a graduated density compensation filter is disposed over the strip (18) of detectors (20) in order to compensate for the poor transmission of optical fibers in the blue region of the spectrum.

9. Apparatus according to any preceding claim, characterized in that the reference emitters associated with the calibration paths (26) are light-emitting diodes (24) emitting predetermined different spectrum bands in the visible spectrum.

10. Apparatus according to any preceding claim, characterized in that the electronic circuits (22) mounted on the optoelectronic card (12) include circuits for automatically adjusting the detector integration time: by measuring the energy flux received by the detectors; by comparing the received flux with the saturation threshold of the detectors; and by setting the integration time so as to obtain a signal whose level is as high as possible below said saturation threshold.

11. Apparatus according to claim 10, characterized in that the circuits for automatically adjusting the integration time of the detectors include a programmable clock controlled by the microprocessor (10).

12. Apparatus according to any preceding claim, characterized in that the measurement portion of the adjusting circuits serving to measure the flux received by the detector signals is also suitable for measuring the noise signals from the detectors (20) when the shutters (34) of the measurement paths are closed, said measurement portion being provided to subtract said noise signals from measurement signals as obtained when a measurement path shutter (34) is open.

13. Apparatus according to any preceding claim, characterized in that the means for reading the detectors (20) are of the multiplex type, with the detector reading frequency being constant and independent of the integration time, and equal, for example, to the maximum frequency for reading the detectors (20) corresponding to the shortest integration time.

14. Apparatus according to any preceding claim, characterized in that the electronic circuits include an analog-to-digital converter, providing an output signal on 12 bits, for example.

15. Apparatus according to any preceding claim, characterized in that the microprocessor (10) includes means for determining the number of times the detectors are to be read for performing a given measurement as a function of the value of the energy flux received by the detectors (20).

16. Apparatus according to claim 15, characterized in that the microprocessor (10) performs Fourier transform smoothing when the number of reads is small.

FIG.1

FIG.2

1